# EUROPEAN PATENT APPLICATION

(11) **EP 1 277 389 A1**
(43) Date of publication of application: **22.01.2003**
(21) Application number: 02015056.1
(22) Date of filing: 05.07.2002
(51) Int. Cl.: A01D 43/063

(54) **A lawn mower vehicle fitted with a tip up container for unloading of cut grass**

(30) Priority: 20.07.2001 IT MI20010413 U
(71) Applicant: Ibea S.p.A., 22070 Luisago (CO) (IT)
(72) Inventor: Faverio, Danilo, 22070 Casnate con Bernate (Co) (IT); Zanirato, Renzo, 22073 Fino Mornasco (Co) (IT)
(74) Representative: Savi, Alberto

(57) **Abstract**

The present innovation relates to a lawn mower vehicle fitted with a tip-up container (8) for unloading of cut grass, wherein said container includes a part (1) which is fixed with respect to the machine, and a unit (3) which is mobile with respect to said machine, characterised by the fact that said mobile unit can slide longitudinally and can rotate around a horizontal axis (8a) which is perpendicular to the sliding direction of said mobile part.

## Description

The invention refers to a device for unloading of grass, to be used with lawn mower vehicles.

On lawn mower vehicles the grass cut by a rotating blade is conveyed towards a container located at the back of the vehicle itself, immediately behind the seat occupied by the operator.

Said container requires periodical unloading which is carried out by opening the container itself at the back and turning it upside down.

On professional machines, of the kind normally used by professional gardeners, especially for the treatment of large areas, the unloading movements are carried out by hydraulic mechanisms. Said mechanisms are, however, very expensive and therefore are normally incompatible with smaller and cheaper machines, such as the ones purchased for private use, for the maintenance of smaller gardens.

On said machines for private use, the unloading of grass is carried out manually by the operator who has to get out of the vehicle, open the container and turn it upside down.

This procedure is uncomfortable to carry out and makes shearing much slower.

The objective of this invention is to fit economic machines for private use with a device that allows for unloading of the grass without having to get out of the vehicle. The objective is reached through the use of a tip-up trolley, which slides on guides and can be activated from the driving position.

The invention will now be described in detail with reference to the attached drawings, in which:
- figure 1 is an exploded view of the general trolley-container apparatus;
- figure 1a illustrates a detail of the trolley;
- figure 2 illustrates the trolley/container in a closed position;
- figure 3 illustrates schematically the device at the beginning of the unloading operation;
- figure 4 illustrates schematically the device at the end of the unloading operation.

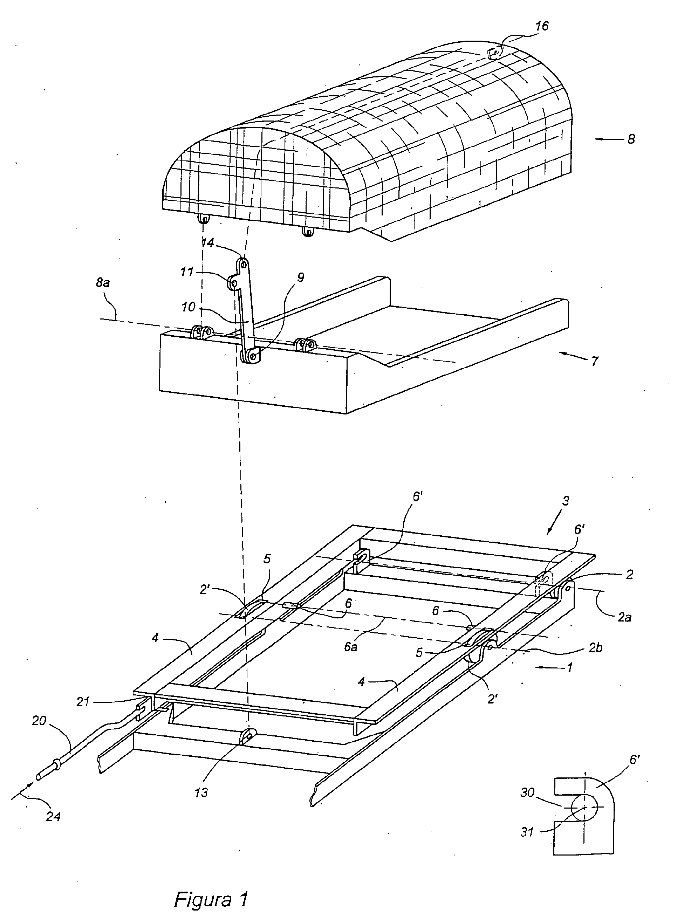

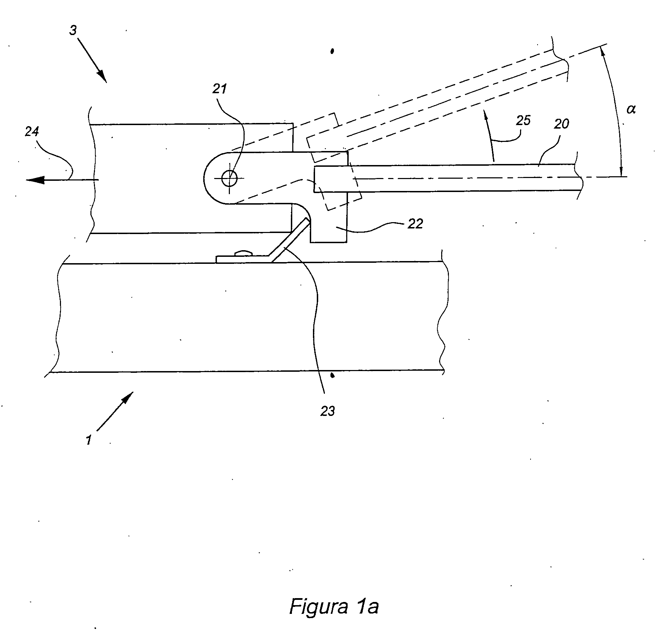

With reference to figure 1, the container according to the invention includes a frame (1) fastened to the frame of the machine, and a mobile unit consisting of a trolley (3), a loading top (7) and a lid (8), being said lid (8) preferably, but not necessarily, present.

Said lid (8) is mounted on the loading top in such a way that it can rotate around an axis (8a) placed in correspondence with a front edge on the loading top (7).

The frame (1) is provided with two rear wheels (2) and two front wheels (2') having axes (2a) and (2b) respectively, upon which said trolley (3) slides in a longitudinal direction, as will be described herein below. The trolley (3) is fitted with a lever with handle (20).

Said axis (2a) and (2b) are horizontal and perpendicular to the sliding direction of the trolley (3).

The lever (20) is fastened to a plate (22) which is hinged to said trolley (3) at a point (21) (figure 1a). The plate (22) is shaped in such a way as to engage a stop means (23) fastened to the frame (1) in such a way that, when said lever (20) is in the position indicated in figure 1a with a continuous line, the trolley cannot move in the direction indicated by the arrow (24).

Furthermore, the rotation of said plate (22), and therefore of said lever (20) is limited by means of a known type in such a way that said lever (20) can only assume the positions included between the one drawn with a full line and the one drawn with a dotted line in figure 1a, with an angular distance α of 20° to 30°.

When, due to the effect of a manoeuvre carried out by the operator, said lever (20) is rotated in the direction indicated by the arrow (25) the plate (22) is released from the stop means (23) and the trolley (3) is free to move in the direction indicated by the arrow (24).

The side-members (4) of said trolley (3) have openings (5), in which the front wheels (2') are partially inserted. The side-members (4) are also provided with two aligned pins (6), having an axis (6a) which is parallel to the axis of the rear wheels and placed at such a height that, when the trolley (3) runs on the wheels (2) and (2') in the direction indicated by the arrow (24), said axis (6a) moves until it coincides with said axis (2a).

A pair of hooks (6') are fastened to the frame (1), said hooks having a slot of a width suitable to house said pins (6), so as to act as a stop means, said hooks (6') being placed in such a way that said axis (6a) of pins (6) stops in correspondence with the axis (2a) of the rear wheels (2).

Preferably, the barycenter of the mobile unit is substantially beyond the axis (6a) of the pins (6). Those skilled in the art may also provide for other positions of said axis (6a), all of which being within the scope of the present invention.

According to a preferred embodiment, the wheels (2) and (2') are mounted on the frame (1) fastened to the machine frame; said wheels however can also be mounted in other ways, e.g. all on the mobile unit (3), or part on the fixed element (1) and part on the mobile unit (3).

As a consequence, the openings (5), the pins (6) and the hooks (6') must be opportunely positioned.

According to another preferred embodiment, said pins (6) are provided on the fixed element and said stopper hooks (6') are provided on the mobile unit, so that the trolley (3) stops when the axis (6a) of the pins (6) is in correspondence with the axis (2a) of the rear wheels (2).

A lever (10) is hinged at a point (9) of said loading top (7).

A cable (12) inserted into a hole (11) at the second end of said lever (10), connects the lever to a wing or plate (13) integral with the element (1), while a cable (15) inserted into a hole (14), also present on said second end of said lever (10), connects the lever with a wing or plate (16) fastened to the lid (8).

Since figure 1 is an exploded view, cables (12) and (15) have been shown by a dotted line. The real lengths of said cables are visible in the other figures.

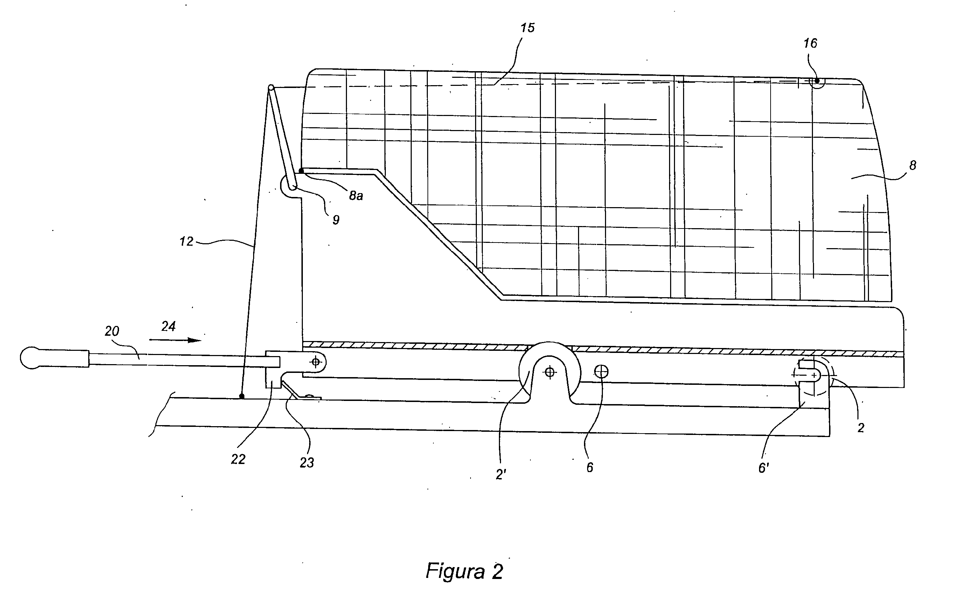

In a normal position, that is to say with the machine switched off or during cutting, the container is in the position shown in figure 2, with the wheels (2) and (2') that sustain the container, and the side-members (4) of the trolley (3) that rest on said wheels (2) and (2').

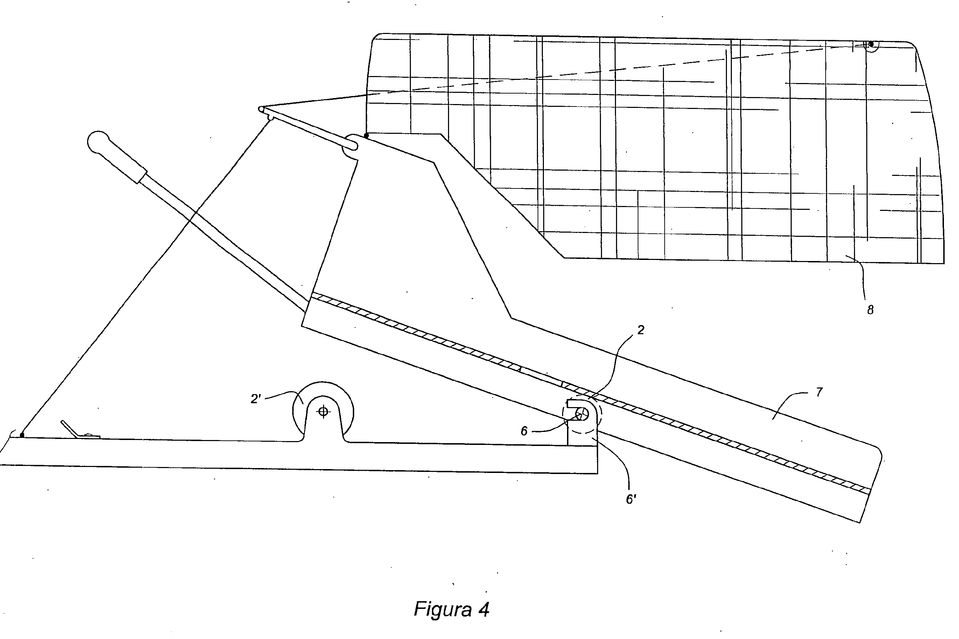

In figures 2, 3 and 4 the rear wheels (2) are illustrated with dotted lines in order to highlight the hooks (6').

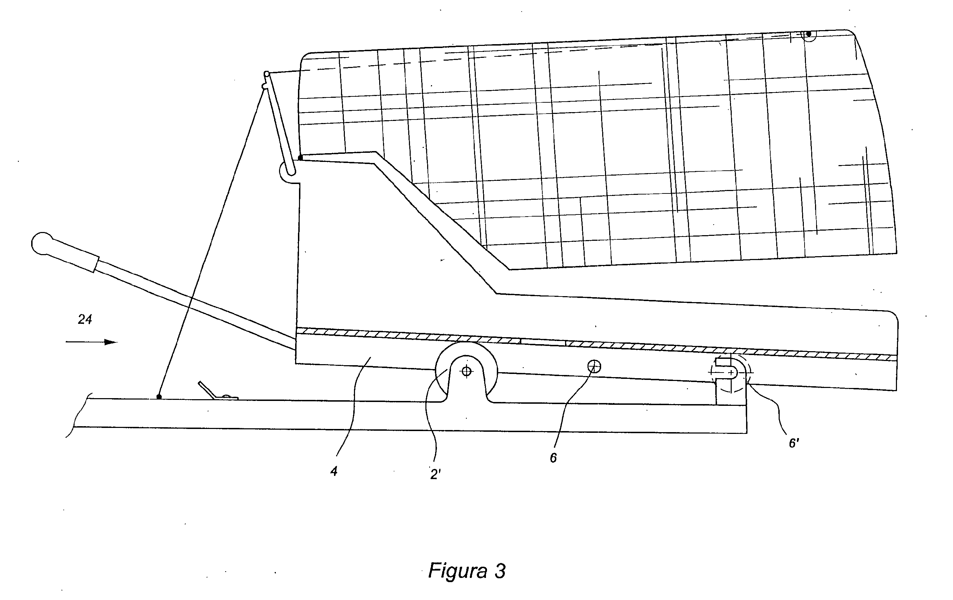

When the operator wants to discharge the cut grass (figure 3), he grasps the lever (20) and rotates it in the direction indicated by the arrow (25), therefore releasing the plate (22) from the stop means (23). By further lifting the lever (20), until the lever reaches its upwards limit, the trolley will rotate slightly on its rear wheels (2), and the front wheels (2') will slip out slightly of their openings (5).

By continuing with this manoeuvre and pushing the lever (20) in the direction of the arrow (24), the trolley (3) moves towards the rear part of the machine and the front wheels (2') will engage the upper part of the side members (4).

By further continuing with the pushing action on the lever (20), according to the arrow (24), the trolley moves towards the rear part of the machine until it stops when the limit hooks (6') engage the pins (6).

In the movement described the cables (12) and (15) stretch, the lever (10) rotates around hinge (9) and the lid (8) starts to rise, rotating around the axis (8a).

At this point the operator, pushing the lever (20) upwards, will rotate the trolley (3) around the pins (6). At the same time the cables (12) and (15) will stretch even more, completing the opening of the lid (8) and the cut grass can therefore be unloaded.

Since in this limit switch position the axis (6a) of the pins (6) coincides substantially with the axis (2a) of the rear wheels (2), during the rotation the weight of the trolley will be supported by the rear wheels (2).

The operation will come about without any particular effort by the operator, since the trolley initially starts to move horizontally, then, when it is ready to be turned upside down, it will rotate around the pins (6) which are in correspondence with the barycenter of said group. The grass in the container does not substantiallly change the balance of weight as it is normally evenly distributed within the container itself.

Return to the original position will simply come about by pushing the lever (20) downwards, which will rotate in the opposite direction to the one indicated by the arrow (25) until it lines up completely with the trolley (3), and pulling it forwards until the plate (22) reaches the stop means (23), to block the trolley (3) in the closed position.

The advantages of the solution according to the invention consist substantially in the fact that it can unload cut grass without having to get out of the vehicle.

As it is a small sized vehicle and as the trolley is made in such a way that the pins (6) are in a substantially barycentrical position compared with the trolley itself, the operation will not be tough. In conclusion, the advantages of a professional lawn mower vehicle can be achieved even with a low cost device.

## Claims

1. A lawn mower vehicle fitted with a tip-up container for unloading of cut grass, wherein said container includes a part which is fixed with respect to the machine, and a unit which is mobile with respect to said machine, **characterised by** the fact that said mobile unit can slide longitudinally and can rotate around a horizontal axis which is perpendicular to the sliding direction of said mobile part.

2. The lawn mower vehicle according to claim 1, **characterised by** the fact that said container for cut grass includes a frame (1) fastened to the structure of the machine, a trolley (3) which slides on wheels (2) and (2') interposed between said trolley (3) and said frame (1) and a loading top (7) mounted on said trolley, and wherein said trolley can slide with respect to the frame (1) so as to move from a first position in which it is supported by all of the wheels, to a second position in which said trolley rests on just two wheels and rotates around the axis of said two wheels so that it inclines and unloads the cut grass.

3. The lawn mower vehicle according to claims 1, and 2, **characterised by** the fact that in the closing position of said container, said front wheels (2') mounted on one of said fixed (1) or mobile (3) parts, engage the openings (5) present on the other mobile (3) or fixed part (1).

4. The lawn mower vehicle according to any of claims 1, 2, and 3, **characterised by** the fact that it includes stop means on the mobile unit, suitable to stop the trolley in the tip-up position.

5. The lawn mower vehicle according to any of the previous claims **characterised by** the fact that it includes two pins (6) on said mobile (3) or fixed (1) part, apt to engage the limit switch hooks (6') provided on the fixed (1) or mobile (3) part, to stop the trolley in the tip-up position.

6. The lawn mower vehicle according to any of the previous claims, **characterised by** the fact that the rotation axis around which the tip-up operation occurs is the axis of the wheels that, during said tip-up operation, support the mobile unit (3) of said container.

7. The lawn mower vehicle according to claim 6 **characterised by** the fact that the rotation axis around which the tip-up operation occurs is the axis (6a) of the pins (6) when said pins engage the limit switch hooks (6').

8. The lawn mower vehicle according to the previous claims, **characterised by** the fact that the axis of the wheels that support the container during the tip-up procedure substantially coincides with the axis (6a) of the pins (6) during the tip-up operation.

9. The lawn mower vehicle according to the previous claims **characterised by** the fact that the barycenter of the mobile unit of the container is substantially on a vertical line which crosses the axis (6a) of the pins (6).

10. The lawn mower vehicle according to the previous claims **characterised by** the fact that it includes means aimed at blocking said trolley in the working position and releasing it to carry out the tip-up procedure, said means including a combined lever integral with a plate (22), hinged in a point (21) of said trolley and apt to engage stop means (23) fastened to the machine frame, said stop means being suitable to be released from said plate due to the effect of an upwards rotation of said lever.

11. The lawn mower vehicle according to the previous claims **characterised by** the fact that the mobile unit of said container includes a trolley (3), a loading top (7), mounted on said trolley (3) and a lid (8) that can rotate, with respect to the loading top (7), around an axis (8a).

12. The lawn mower vehicle according to claim 11 **characterised by** the fact that it includes a lever (10), with a first end hinged at a point (9) of the loading top (7), the second end of said lever being connected by a cable (12) to a fixed part (13) and by a cable (15) to a wing (16) fastened to the lid (8) so that when, due to the sliding effect of the mobile unit of said container with respect to the fixed part of said container and of the subsequent rotation of said mobile part with respect to said fixed part, said cables (12) and (15) are tightened, the lever (10) rotates around its fulcrum (9) and the lid (8) rises, rotating around the axis (8a) with respect to the loading top (7).
